(19) Europäisches Patentamt
European Patent Office
Office européen des brevets

(11) **EP 4 770 209 A1**

(12) **EUROPEAN PATENT APPLICATION**
published in accordance with Art. 153(4) EPC

(43) Date of publication:
**01.07.2026 Bulletin 2026/27**

(21) Application number: **24867300.6**

(22) Date of filing: **04.09.2024**

(51) International Patent Classification (IPC):
**H04W 52/02** (2009.01)

(52) Cooperative Patent Classification (CPC):
**H04W 52/02; H04W 52/14**

(86) International application number:
**PCT/CN2024/116883**

(87) International publication number:
**WO 2025/060888 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.09.2023 CN 202311203839**

(71) Applicant: **Huawei Technologies Co., Ltd.
Shenzhen, Guangdong 518129 (CN)**

(72) Inventors:
• **WU, Longjun**
  **Shenzhen, Guangdong 518129 (CN)**
• **TAN, Ting**
  **Shenzhen, Guangdong 518129 (CN)**
• **CHEN, Chao**
  **Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **POWER CONTROL METHOD AND APPARATUS**

(57) Embodiments of this application provide a power control method and apparatus. The method includes: A base station receives N uplink signals sent by a terminal device, where the N uplink signals are sent by the terminal device based on first transmission power, and N is an integer greater than 1; the base station determines second transmission power of an uplink signal of the terminal device based on padding data proportions of the N uplink signals of the terminal; and the base station indicates the terminal device to send the uplink signal at the second transmission power. Therefore, transmit power of the uplink signal of the terminal device can be adjusted based on a service status of the terminal device.

S301
Receive N uplink signals sent by a terminal device, where the N uplink signals are sent by the terminal device based on first transmission power, and N is an integer greater than 1

S302
Determine second transmission power of an uplink signal of the terminal device based on proportions of padding data in the N uplink signals

S303
Send power indication information to the terminal device, where the power indication information indicates the terminal device to send the uplink signal at the second transmission power

FIG. 3

**Description**

This application claims priority to Chinese Patent Application No. 202311203839.0, filed with the China National Intellectual Property Administration on September 18, 2023 and entitled "POWER CONTROL METHOD AND APPARATUS", which is incorporated herein by reference in its entirety.

**TECHNICAL FIELD**

Embodiments of this application relate to the communication field, and in particular, to a power control method and apparatus.

**BACKGROUND**

Compared with a 4th generation (4th Generation, 4G for short) mobile communication technology, a 5th generation (5th Generation, 5G for short) mobile communication technology defines enhanced mobile broadband (enhanced Mobile Broadband, eMBB), massive machine-type communications (Massive Machine-Type Communications, mMTC), and ultra-reliable low-latency communication (ultra-reliable Low-latency Communication, URLLC), aiming to provide more reliable communication quality and new communication experience for exponentially increasing access users. A quantity of users in a 5G network increases greatly, and data transmission increases explosively. Therefore, a larger channel capacity and higher spectral efficiency (Spectral Efficiency, SE) are urgently required. In addition, in a key capability indicator of 5G, a quantity of bits that can be transmitted per joule of energy is 100 times that of the 4G. Therefore, energy consumption needs to be reduced to improve energy efficiency (Energy Efficiency, EE) of a system from a perspective of green communication. Therefore, how to configure uplink power becomes an urgent problem to be resolved.

**SUMMARY**

This application provides a communication method and apparatus, to reduce energy consumption and improve energy efficiency of a system to some extent.

To achieve the foregoing objectives, this application uses the following technical solutions.

According to a first aspect, an embodiment of this application provides a power control method. The method includes: A base station receives N uplink signals sent by a terminal device, where the N uplink signals are sent by the terminal device based on first transmission power, and N is an integer greater than 1; the base station determines second transmission power of an uplink signal of the terminal device based on padding data proportions of the N uplink signals; and the base station sends power indication information to the terminal device, where the power indication information indicates the terminal device to send the uplink signal at the second transmission power.

In this way, the base station may determine a service transmission status of an uplink channel of the terminal device based on the padding data in the uplink signal sent by the terminal device, and further adjusts transmission power of the uplink channel based on the service transmission status. In this way, a waste of resources is avoided, system energy consumption is reduced, and energy efficiency of a system is improved.

In a possible implementation, if the padding data proportions of the N uplink signals meet a preset condition, the second transmission power is less than the first transmission power, where the preset condition indicates that the padding data proportions of the N uplink signals exceed a threshold.

In this way, the base station may determine a service status of the terminal based on the padding data proportion of the uplink signal. When a proportion of service data of the terminal is small, that is, the padding data proportion is large, transmit power of the uplink signal of the terminal device may be reduced, thereby reducing energy consumption of the terminal device, further reducing battery consumption of the terminal device, and prolonging standby time of the device. In addition, power allocation reasonableness in a system can be improved, to avoid a waste of resources and improve overall efficiency and throughput of a network. In addition, in this application, corresponding power adjustment policies are set for different service statuses of the terminal device, so that a network congestion phenomenon can be avoided, communication efficiency can be improved, and use experience of an online user can be improved. In addition, in this embodiment of this application, in a scenario in which the base station reduces the transmit power of the terminal device based on the service status, inter-cell interference of the terminal device to another terminal device in a neighboring cell can be effectively reduced.

In a possible implementation, the method further includes: If the padding data proportions of the N uplink signals do not meet the preset condition, the second transmission power is greater than or equal to the first transmission power.

In this way, the base station may determine a service transmission status of an uplink channel of the terminal device based on the padding data in the uplink signal of the terminal, and further determine, based on the service transmission status, whether a waste of resources exists on the uplink channel of the terminal device. If no waste of resources exists on the uplink channel of the terminal device, the transmission power of the terminal device may be increased or not adjusted, to meet different requirements of the terminal device.

In a possible implementation, a single uplink signal includes a padding data field, the padding data field includes padding data indication information, the padding data indication information indicates whether the single uplink signal includes padding data, and determining the second transmission power of the uplink signals of the terminal device based on the padding data proportions of the N uplink signals includes: determining, based on the padding data indication information in the padding data field of the single uplink signal, whether the single uplink signal includes the padding data; if the padding data indication information indicates that the single uplink signal does not include the padding data, determining that a padding data proportion of the single uplink signal is 0; and if the padding data indication information indicates that the single uplink signal includes the padding data, obtaining the padding data proportion of the single uplink signal.

In this way, the base station in this application may determine, by identifying the padding data field, whether the padding data is included. If the padding data is not included, the padding data proportion may not be further determined. If the padding data is carried, the padding data proportion may be determined based on the padding data, to determine whether the preset condition is met.

In a possible implementation, the preset condition includes: A quantity of uplink signals whose proportions of padding data exceed the threshold in the N uplink signals is greater than a preset quantity. In this way, whether the padding data proportion exceeds the threshold may be measured by setting the preset condition, so that a relationship between resource utilization and power adjustment accuracy is balanced by setting an appropriate preset condition.

In a possible implementation, the padding data proportion is a ratio of padding data to total data in an uplink signal, and the total data includes padding data and valid data.

In a possible implementation, second power indication information is carried in a downlink control information DCI field of a physical downlink control channel PDCCH.

According to a second aspect, this application provides a power control apparatus, including a receiving module, a configuration module, and a sending module. The receiving module is configured to receive N uplink signals sent by a terminal device, where the N uplink signals are sent by the terminal device based on first transmission power, and N is an integer greater than 1; the configuration module is configured to determine second transmission power of an uplink signal of the terminal device based on padding data proportions of the N uplink signals; and the sending module is configured to send power indication information to the terminal device, where the power indication information indicates the terminal device to send the uplink signal at the second transmission power.

In a possible implementation, if the padding data proportions of the N uplink signals meet a preset condition, the second transmission power is less than the first transmission power, where the preset condition indicates that the padding data proportions of the N uplink signals exceed a threshold.

In a possible implementation, if the padding data proportions of the N uplink signals do not meet the preset condition, the second transmission power is greater than or equal to the first transmission power.

In a possible implementation, a single uplink signal includes a padding data field, the padding data field includes padding data indication information, the padding data indication information indicates whether the single uplink signal includes padding data, and the configuration module is specifically configured to: determine, based on the padding data indication information in the padding data field of the single uplink signal, whether the single uplink signal includes the padding data; if the padding data indication information indicates that the single uplink signal does not include the padding data, determine that a padding data proportion of the single uplink signal is 0; and if the padding data indication information indicates that the single uplink signal includes the padding data, obtain the padding data proportion of the single uplink signal.

In a possible implementation, the preset condition includes: A quantity of uplink signals whose proportions of padding data exceed the threshold in the N uplink signals is greater than a preset quantity.

In a possible implementation, the padding data proportion is a ratio of padding data to total data in an uplink signal, and the total data includes padding data and valid data.

In a possible implementation, second power indication information is carried in a downlink control information DCI field of a physical downlink control channel PDCCH.

According to a third aspect, an embodiment of this application provides a base station, including a transceiver/-transceiver pin and a processor, and optionally, further including a memory. The transceiver/transceiver pin, the processor, and the memory communicate with each other through an internal connection path; the processor is configured to execute instructions to control the transceiver/transceiver pin to send or receive a signal; and the memory is configured to store instructions. When the processor executes the instructions, the processor performs the method according to the first aspect or any possible implementation of the first aspect.

According to a fourth aspect, an embodiment of this application provides a computer-readable medium, configured to store a computer program. The computer program includes instructions used to perform the method according to the first aspect or any possible implementation of the first aspect.

According to a fifth aspect, an embodiment of this application provides a computer program. The computer program includes instructions used to perform the method according to the first aspect or any possible implementation of the first aspect.

According to a sixth aspect, an embodiment of this application provides a chip. The chip includes a processing circuit and a transceiver pin. The transceiver pin and the processing circuit communicate with each other through an internal connection path. The processing circuit performs the method according to the first aspect or any possible implementation of the first aspect, to control a receiving pin to receive a signal, and control a sending pin to send a signal.

According to a seventh aspect, an embodiment of this application provides a power control system, where the system includes the terminal device and the base station in the first aspect and the second aspect.

## BRIEF DESCRIPTION OF DRAWINGS

To describe technical solutions in embodiments of this application more clearly, the following briefly describes accompanying drawings required for describing embodiments of this application. Apparently, the accompanying drawings in the following descriptions show merely some embodiments of this application, and a person of ordinary skill in the art may still derive other accompanying drawings from these accompanying drawings without creative efforts.

FIG. 1 is a diagram of an example of an architecture of a communication system;
FIG. 2a is a diagram of an example of a structure of a base station;
FIG. 2b is a diagram of an example of a structure of a terminal;
FIG. 3 is a schematic flowchart of a power control method according to an embodiment of this application;
FIG. 4 is a diagram of an example of an uplink signal;
FIG. 5 is a schematic flowchart of a power control method according to an embodiment of this application;
FIG. 6 is a diagram of an example of a structure of a power control apparatus; and
FIG. 7 is a diagram of an example of a structure of a power control apparatus.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a specific order of the objects. For example, a first target object, a second target object, and the like are used for distinguishing between different target objects, but are not used for describing a specific order of the target objects.

In embodiments of this application, the term "example" or "for example" indicates giving an example, an illustration, or a description. Any embodiment or design solution described as an "example" or "for example" in embodiments of this application should not be construed as being more preferred or having more advantages than another embodiment or design solution. To be precise, use of the term like "example" or "for example" is intended to present a related concept in a specific manner.

In descriptions of embodiments of this application, unless otherwise specified, "a plurality of" means two or more than two. For example, a plurality of processing units mean two or more processing units, and a plurality of systems mean two or more systems.

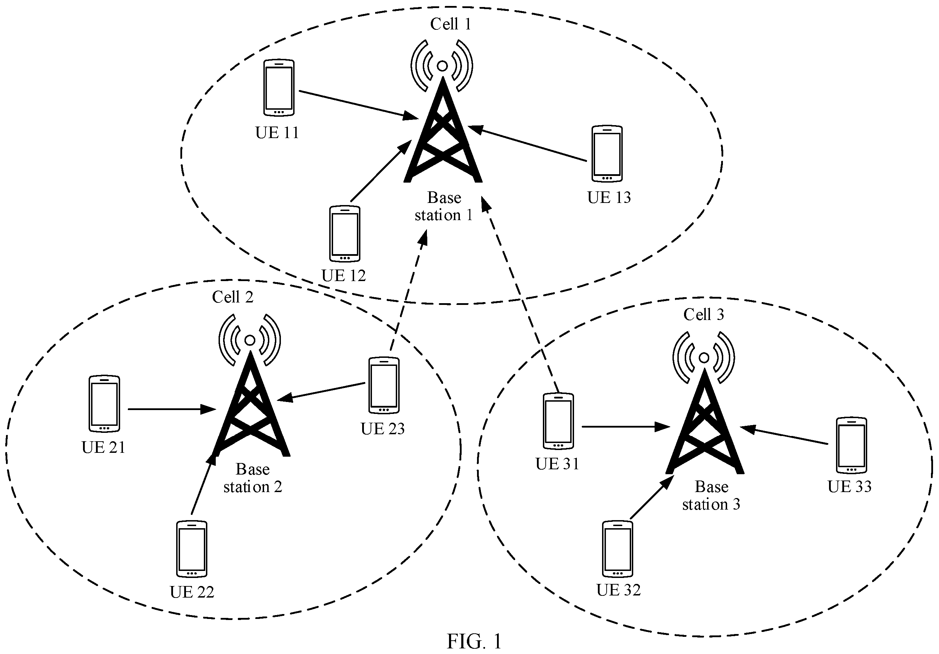

Before the technical solutions in embodiments of this application are described, a communication system in embodiments of this application is first described with reference to the accompanying drawings. FIG. 1 is a diagram of a communication system according to an embodiment of this application. The communication system includes at least one base station and at least one terminal device, for example, a base station 1, a base station 2, a base station 3, UE 11 (User Equipment, terminal) to UE 13, UE 21 to UE 23, and UE 31 to UE 33. In this scenario, the base station 1 includes a cell 1, the base station 2 includes a cell 2, and the base station 3 includes a cell 3. The UE 11 to the UE 13 access the base station 1, and the UE 11 to the UE 13 are in a coverage area of the cell 1. The UE 21 to the UE 23 access the base station 2, and the UE 21 to the UE 23 are in a coverage area of the cell 2. The UE 31 to the UE 33 access the base station 3, and the UE 31 to the UE 33 are in a coverage area of the cell 3.

The communication system may be used to support a 4th generation (4th generation, 4G) access technology, for example, a long term evolution (long term evolution, LTE) access technology. Alternatively, the communication system may support a 5th generation (5th generation, 5G) access technology, for example, a new radio (new radio, NR) access technology. Alternatively, the communication system may be used to support a third generation (third generation, 3G) access technology, for example, a universal mobile telecommunications system (universal mobile telecommunications system, UMTS) access technology. Alternatively, the communication system may be used to support a second generation (second generation, 2G) access technology, for example, a global system for mobile communications (global system for mobile communications, GSM) access technology. Alternatively, the communication system may be a communication system that supports a plurality of wireless technologies, for example, a communication system that supports an LTE technology and an NR technology. In addition, the communication system may be applied to a narrowband Internet of Things (Narrowband Internet of Things, NB-IoT) system, an enhanced data rates for GSM evolution (Enhanced Data rates for GSM Evolution, EDGE) system, a wideband code division multiple access (Wideband Code Division Multiple Access, WCDMA) system, a code division multiple access 2000 (Code Division Multiple Access 2000, CDMA2000) system, a time division-synchronous code division multiple access (Time Division-Synchronous Code Division Multiple Access, TD-SCDMA) system, a long term evolution (Long Term Evolution, LTE) system, and a future-oriented communication technology.

In addition, the base station in FIG. 1 may be configured to support access of a terminal, for example, may be a base transceiver station (base transceiver station, BTS) and a base station controller (base station controller, BSC) in a communication system supporting the 2G access technology, a NodeB (NodeB) and a radio network controller (radio network controller, RNC) in a communication system supporting the 3G access technology, an evolved NodeB (evolved NodeB, eNB) in a communication system supporting the 4G access technology, a next generation NodeB (next generation NodeB, gNB), a transmission reception point (transmission reception point, TRP), a relay node (relay node), or an access point (access point, AP) in a communication system supporting the 5G access technology, and the like. For ease of description, in all embodiments of this application, apparatuses that provide a wireless communication function for a terminal are collectively referred to as a network device or a base station.

The terminal in FIG. 1 may be a device that provides voice or data connectivity for a user, for example, may also be referred to as a mobile station (mobile station), a subscriber unit (subscriber unit), a station (station), or a terminal device (terminal equipment, TE). The terminal may be a cellular phone (cellular phone), a personal digital assistant (personal digital assistant, PDA), a wireless modem (modem), a handheld (handheld) device, a laptop computer (laptop computer), a cordless phone (cordless phone), a wireless local loop (wireless local loop, WLL) station, a tablet computer (pad), or the like. With development of wireless communication technologies, any device that can access a communication system, any device that can communicate with a network side in a communication system, or any device that can communicate with another object through a communication system may be the terminal in embodiments of this application, for example, a terminal and a vehicle in intelligent transportation, a household device in a smart household, an electricity meter reading instrument in a smart grid, a voltage monitoring instrument, an environment monitoring instrument, a video surveillance instrument in an intelligent security network, or a cash register. In embodiments of this application, the terminal may communicate with a base station, for example, the base station in FIG. 1. A plurality of terminals may communicate with each other. The terminal may be statically fixed or may be movable.

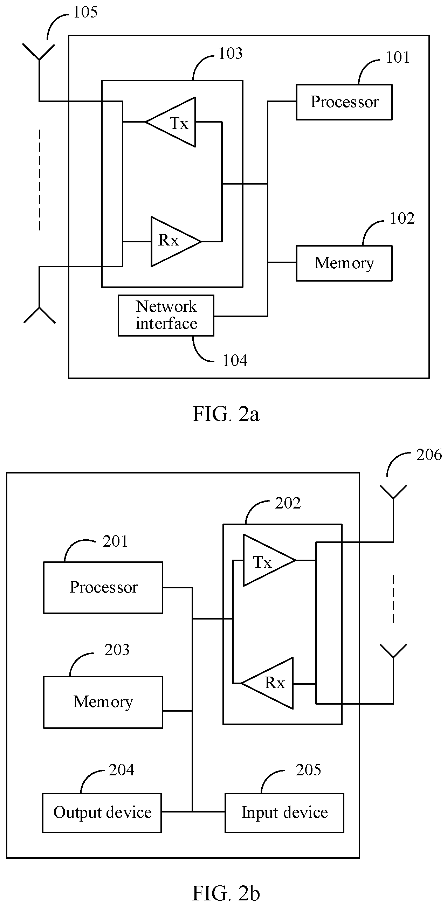

FIG. 2a is a diagram of a structure of a base station. In FIG. 2a, the base station includes at least one processor 101, at least one memory 102, at least one transceiver 103, at least one network interface 104, and one or more antennas 105. The processor 101, the memory 102, the transceiver 103, and the network interface 104 are connected, for example, through a bus. The antenna 105 is connected to the transceiver 103. The network interface 104 is configured to enable the base station to be connected to another communication device through a communication link. In this embodiment of this application, the connection may include various types of interfaces, transmission lines, buses, or the like. This is not limited in this embodiment.

In this embodiment of this application, the processor, for example, the processor 101, may include at least one of the following types: a general-purpose central processing unit (Central Processing Unit, CPU), a digital signal processor (Digital Signal Processor, DSP), a microprocessor, an application-specific integrated circuit (Application-Specific Integrated Circuit, ASIC), a microcontroller unit (Microcontroller Unit, MCU), a field programmable gate array (Field Programmable Gate Array, FPGA), or an integrated circuit configured to implement a logical operation. For example, the processor 101 may be a single-core (single-CPU) processor or a multi-core (multi-CPU) processor. The at least one processor 101 may be integrated into one chip or located on a plurality of different chips.

In this embodiment of this application, the memory, for example, the memory 102, may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer, but is not limited thereto.

The memory 102 may exist independently, and is connected to the processor 101. Optionally, the memory 102 may alternatively be integrated with the processor 101, for example, integrated into a chip. The memory 102 can store program code for executing the technical solutions in embodiments of this application, and the processor 101 controls the execution. Various types of executed computer program code may also be considered as drivers of the processor 101. For example, the processor 101 is configured to execute the computer program code stored in the memory 102, to implement the technical solutions in embodiments of this application. Optionally, the memory 102 may alternatively be located outside a chip, and is connected to the processor 101 through an interface.

The transceiver 103 may be configured to support receiving or sending of a radio frequency signal between an access network device and a terminal, and the transceiver 103 may be connected to the antenna 105. The transceiver 103 includes a transmitter Tx and a receiver Rx. Specifically, the one or more antennas 105 may receive a radio frequency signal. The receiver Rx of the transceiver 103 is configured to receive the radio frequency signal from the antenna, convert the radio frequency signal into a digital baseband signal or a digital intermediate frequency signal, and provide the digital baseband signal or the digital intermediate frequency signal to the processor 101, so that the processor 101 performs further processing, for example, performs demodulation processing and decoding processing, on the digital baseband signal or the digital intermediate frequency signal. In addition, the transmitter Tx of the transceiver 103 is further configured to receive a modulated digital baseband signal or a modulated digital intermediate frequency signal from the processor 101, convert the modulated digital baseband signal or the modulated digital intermediate frequency signal into a radio frequency signal, and send the radio frequency signal through the one or more antennas 105. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing processing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

FIG. 2b is a diagram of a structure of a terminal. In a specific implementation process of this embodiment of this application, the terminal may be a device, for example, a computer, a smartphone, a telephone set, a cable TV set-top box, or a digital subscriber line router. It should be noted that, in actual application, there may be one or more base stations and terminals. A quantity of base stations and a quantity of terminals in the communication system shown in FIG. 1 are merely an adaptive example. This is not limited in this application. In FIG. 2b, the terminal includes at least one processor 201, at least one transceiver 202, and at least one memory 203. The processor 201, the memory 203, and the transceiver 202 are connected. Optionally, the terminal may further include an output device 204, an input device 205, and one or more antennas 206. The antenna 206 is connected to the transceiver 202. The output device 204 and the input device 205 are connected to the processor 201.

For the transceiver 202, the memory 203, and the antenna 206, refer to related descriptions in FIG. 2a. Similar functions are implemented.

The processor 201 may be a baseband processor or a CPU. The baseband processor and the CPU may be integrated or separated.

The processor 201 may be configured to implement various functions for the terminal, for example, configured to process a communication protocol and communication data, or configured to control the entire terminal device, execute a software program, and process data of the software program, or configured to assist in completing a computing processing task, for example, graphics and image processing or audio processing. Alternatively, the processor 201 is configured to implement one or more of the foregoing functions.

The output device 204 communicates with the processor 201, and may display information in a plurality of manners. For example, the output device 204 may be a liquid crystal display (liquid crystal display, LCD), a light-emitting diode (light-emitting diode, LED) display device, a cathode ray tube (cathode ray tube, CRT) display device, or a projector (projector). The input device 205 communicates with the processor 201, and may receive an input of a user in a plurality of manners. For example, the input device 205 may be a mouse, a keyboard, a touchscreen device, or a sensing device.

The memory 203 may exist independently, and is connected to the processor 201. Optionally, the memory 203 may alternatively be integrated with the processor 201, for example, integrated into a chip. The memory 203 can store program code for executing the technical solutions in embodiments of this application, and the processor 201 controls the execution. Various types of executed computer program code may also be considered as drivers of the processor 201. For example, the processor 201 is configured to execute the computer program code stored in the memory 203, to implement the technical solutions in embodiments of this application. Optionally, the memory 203 may alternatively be located outside a chip, and is connected to the processor 201 through an interface.

The following describes related background briefly.

1) Downlink channel

To support uplink/downlink data transmission, a carrier needs to carry downlink control signaling, so that uplink/downlink data can be successfully received. Because information carried in the signaling comes from a physical layer (which may also be referred to as an L1 layer) or a medium access control (Medium Access Control, MAC) layer (which may also be referred to as an L2 layer), the signaling may also be referred to as downlink physical layer control signaling or downlink MAC layer control signaling. The downlink physical layer control signaling or the downlink MAC layer control signaling includes: a physical control format indicator channel (physical control format indicator channel, PCFICH), a physical hybrid automatic repeat request (Hybrid Automatic Repeat Request, HARQ) indicator channel (physical HARQ indicator channel, PHICH), and a physical downlink control channel (physical downlink control channel, PDCCH).

The following describes the control signaling in a control area.

The PDCCH is mainly used to transmit downlink control information (downlink control information, DCI), and the DCI includes at least one of the following: downlink scheduling information, uplink scheduling information, an aperiodic CQI reporting request, multicast control channel (Multicast Control Channel, MCCH) information, an uplink power control command, HARQ-related information, a radio network temporary identifier (Radio Network Temporary Identifier, RNTI), and the like.

The downlink scheduling information indicates UE to receive a physical downlink shared channel (Physical Downlink Shared Channel, PDSCH). The uplink scheduling information indicates the UE to send a physical uplink shared channel (Physical Uplink Shared Channel, PUSCH). For example, the uplink scheduling information includes but is not limited to scheduling information of a PUSCH transmission resource, uplink power control information, and slot format indication information.

For example, in a protocol (for example, R15 38.212), the DCI includes but is not limited to eight categories (or may include more categories, and is not limited in this application), including DCI 0_0, DCI 0_1, DCI 1_0, DCI 1_1, DCI 2_0, DCI 2_1, DCI 2_2, and DCI 2_3.

Embodiments of this application mainly relate to the DCI 0_1 that indicates a transmit power control (Transmit Power Control, TPC) instruction of the PUSCH. It should be noted that embodiments of this application uses only an example in which an uplink signal is the PUSCH for description. In another embodiment, the uplink signal may alternatively be another type of signal. In other words, a power control method in embodiments of this application may also be applied to another type of uplink signal. Correspondingly, the DCI indicating the TPC instruction of the corresponding uplink signal may also be another type of DCI, for example, the DCI 2_2, and may be set based on an actual requirement. This is not limited in this application.

2) Inter-cell interference

The following briefly describes a concept of the inter-cell interference with reference to FIG. 1. For example, each terminal device may exchange data with a base station accessed by the terminal device. In this example, an example in which each terminal device sends an uplink signal is used for description. In an actual application scenario, each base station may send a signal (that is, a downlink signal) to at least one terminal device that accesses the base station. As shown in FIG. 1, when the base station 1 receives an uplink signal of the UE 13, the base station 1 may receive uplink signals (which may be referred to as interfering signals) of the UE 23 and the UE 31. That is, the uplink signal sent by the UE 23 to the base station 2 may cause interference to the uplink signal of the UE 13. Similarly, the uplink signal sent by the UE 31 to the base station 3 may also cause interference to the uplink signal of the UE 13. In other words, cell interference is formed between the UE 23 and the UE 13 and between the UE 31 and the UE 13, so that the base station may fail to correctly receive the uplink signal of the UE 13.

For example, to avoid the cell interference, a common solution is to adjust transmit power, for example, increase transmit power (which may also be referred to as transmission power, and is not limited in this application) of the uplink signal of the UE 13, thereby improving spectral efficiency, network energy efficiency, and resource utilization efficiency, and ensuring network stability and reliability. However, with an increase in a quantity of mobile devices and an increase in a data requirement in a 5G network, inappropriate uplink power control may cause the following problems:

(1) Interference problem: Excessively high uplink power may cause interference between UE, affecting communication quality and system performance.

(2) Power consumption problem: Excessively high power increases battery consumption of UE and shortens standby time of the device.

(3) Resource utilization problem: Inappropriate power allocation may cause a waste of resources and reduce overall efficiency and throughput of the 5G network.

(4) Network congestion problem: In a high-density network environment, if there is no effective power control policy, a network congestion phenomenon may occur, resulting in an increase in a communication delay and deterioration of user experience. Therefore, a good uplink power control solution is a basis for ensuring performance, stability, and energy efficiency of the 5G network.

Currently, in the LTE/NR, a related technical solution has proposed an uplink power control system for a multi-cell base station.

A basic framework of uplink power control is defined by 3GPP 38.213, and is mainly based on a fractional power control (Fractional Power Control, FPC) mechanism that combines fast closed-loop power control and open-loop power control with partial path loss compensation. The FPC mechanism is divided into three parts: open-loop control (Open-Loop Control, OLC), closed-loop control (Closed-Loop Control, CLC) and another adjustment. The OLC determines initial power setting, and is used to set a basic working point of a network. A purpose of the CLC is to correct an error in OLC configuration, so that transmit power [1] can be adjusted near the basic working point. That is, the OLC can compensate for a path loss and a shadow, and the CLC can cope with fast fading. On an uplink carrier of a cell, actual transmit power of UE is calculated according to the following formula. (If a plurality of uplink carriers are configured for the UE, power control is respectively performed on each carrier according to the following formula)

$$P=$$

$$\min\{\text{Maximum transmit power of the UE on the uplink carrier, expected uplink transmit power}\}$$

$$= \min\{P_{\text{CMAX}}, \{\text{Opend} - \text{loop power control}\} + \{\text{Closed} - \text{loop power control}\}$$

$$+ \{\text{Another adjustment}\}\}$$

$$= \min\{P_{\text{CMAX}}, \{P_0(j) + \alpha(j) \cdot P_{\text{L}}(q)\} + \{f(l)\} + \{10\lg(2^{\mu}M) + \Delta_{\text{TF}}\}\}$$

$P_{\text{CMAX}}$ is maximum uplink transmit power that matches a power level of the UE, and is carrier-level configuration. The open-loop power control is power control related to high layer configuration of radio resource control (Radio Resource Control, RRC) and partial path loss compensation, and includes expected receive power of the base station $P_0(j)$, a partial path loss compensation factor $P_{\text{L}}(q)$, and path loss estimation $P_{\text{L}}(q)$, where $j$ is an index of a parameter set, and a value range of $\alpha$ is {0, 0.4, 0.5, 0.6, 0.7, 0.8, 0.9, 11, and a function of the open-loop power control is to allow a terminal to perform partial compensation for the path loss to reduce interference to a neighboring cell and improve a transmission rate at a cell edge. However, transmission power of a user near a cell center in the cell is reduced, causing a decrease in an overall cell capacity.

Therefore, an appropriate path loss compensation factor ranging from 0 to 1 may be selected to achieve a balance between the overall cell capacity and transmission performance at the cell edge. In an actual system, $\alpha$ is 0.7 or 0.8, so that a good balance between the overall cell capacity and the transmission performance at the cell edge can be achieved. Therefore, $\alpha$ is used for power control of a physical uplink shared channel (physical uplink shared channel, PUSCH) PUSCH and a channel sounding reference signal (sounding reference signal, SRS). However, a physical uplink control channel (physical uplink control channel, PUCCH) and a physical random access channel (Physical Random Access Channel, PRACH) have a low requirement on throughput and a high requirement on transmission performance of all UE in the cell. Therefore, the protocol specifies that full path loss compensation is performed, that is, only a value 1 of $\alpha$ is supported. $P_{\text{L}}(q)$ may be estimated through a downlink reference signal: a synchronization signal and PBCH block (Synchronization Signal and PBCH block, SSB) or a CSI reference signal (CSI reference signal, CSI-RS). $q$ is an index of a reference signal used to measure the path loss (each reference signal is associated with a specific $q$ value) and is selected from a set of path loss estimation values maintained by the UE.

The closed-loop power control $f(l)$ is power control related to historical transmission power. $l$ is an index of an adjustment of the closed-loop power control. The base station may quickly adjust transmission power of the UE through $f(l)$, where an adjustment basis is a previous transmission effect of the UE, and adjustment information is indicated by DCI (Downlink control information, downlink control information). The previous transmission effect of the UE is reported to the base station through a power headroom report (Power Headroom Report, PHR). When the base station finds, based on the power headroom reported by the UE, that expected transmit power of the UE is excessively high, the base station may indicate, through closed-loop adjustment information, the UE to reduce transmit power in next transmission. The closed-loop adjustment information in the DCI is referred to as a transmit power control command (Transmit Power Control Command, TPC command), is represented as $\delta(l)$, and is determined according to a TPC command mapping table defined in the protocol 3GPP 38.213.

The another adjustment is a power adjustment related to frequency domain resource allocation and link adaptation. *M* is a quantity of resource blocks (resource blocks, RBs) allocated for current uplink transmission. When a subcarrier spacing (subcarrier spacing, SCS) is 15 kHz, $\mu = 0$. If the SCS is doubled, a value of $\mu$ is also increased by 1, that is, the transmission power is also doubled accordingly. The rest can be deduced by analogy. $\Delta_{TF}$ is an adjustment related to a transport format (Transport Format, TF) of the current uplink transmission. For example, in PUSCH power control, $\Delta_{TF}$ is a power offset determined by a transmission modulation and coding scheme (modulation and coding scheme, MCS) level, and in PUCCH power control, $\Delta_{TF}$ is a power offset determined by a PUCCH format. Generally, $\Delta_{TF}$ is configured.

In the uplink power control, a base station side calculates TPC of the UE based on parameters such as a power control configuration parameter, information fed back by the UE, and information measured by the base station, and sends the TPC to the UE through the DCI in the PDCCH. The UE maps the TPC to a power adjustment and determines final uplink transmit power based on information such as the maximum transmit power of the UE, the path loss, the quantity of RBs, and the transport format.

In conclusion, the uplink power control controls, based on a fading characteristic of a radio channel and a power saving requirement of a terminal, transmit power of a wireless terminal, to ensure uplink transmission performance and expect to stabilize a received signal and demodulation performance of the base station; reduces power consumption of the UE and interference between neighboring cells in a system; and meets requirements for cell throughput and edge user throughput.

An embodiment of this application provides a power control method. In this method, transmit power of a terminal device may be adjusted based on an actual service status of a terminal user, thereby reducing a waste of resources, improving resource utilization, achieving an effect of reducing interference between uplink channels of a plurality of cells, and increasing user experience and network performance.

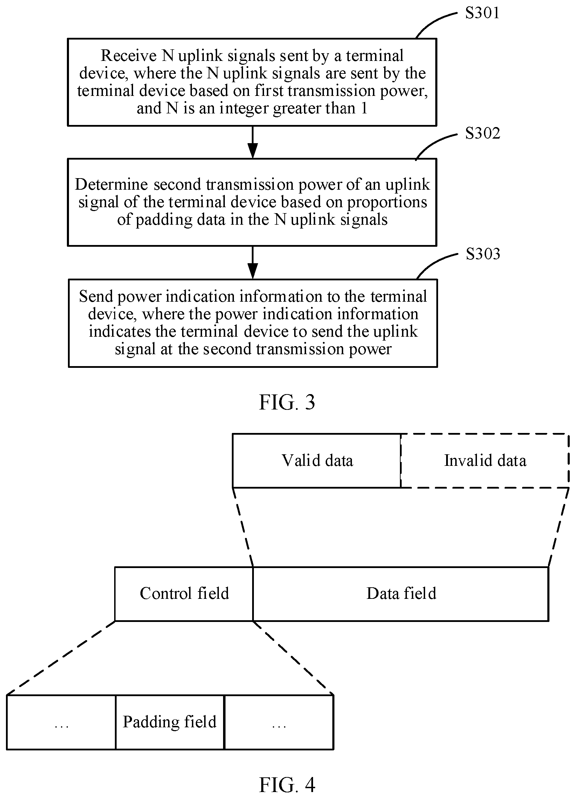

FIG. 3 is a schematic flowchart of a power control method according to an embodiment of this application. Refer to FIG. 3. The method specifically includes but is not limited to the following steps.

S301. Receive N uplink signals sent by a terminal device, where the N uplink signals are sent by the terminal device based on first transmission power, and N is an integer greater than 1.

For example, when needing to send service data, the terminal device sends, based on transmission power (for example, the first transmission power) and other uplink scheduling information that are indicated by a base station accessed by the terminal device, the uplink signals to the base station. The uplink signal (for example, a PUSCH) includes but is not limited to control information and data information.

FIG. 4 is a diagram of an example of an uplink signal. Refer to FIG. 4. The uplink signal includes a control field and a data field (may further include another field, for example, a CRC, and is not limited in this application). The control field is used to carry the control information, and the data field is used to carry the data information.

In this embodiment of this application, the data information includes but is not limited to valid data and/or padding data. The terminal device may determine, based on an indication of the base station, a quantity of symbols occupied by the data information. If a quantity of pieces of valid data to be sent by the terminal device is less than the quantity of symbols indicated by the base station, the terminal device fills the data field with invalid data (that is, the padding data). It should be noted that a length of the valid data and a length of the padding data shown in FIG. 4 are merely examples, and are not limited in this application.

For example, the control field includes but is not limited to a Padding (Padding) field that indicates whether the data field includes the padding data. In an example, if a character in the Padding field is "0", the Padding field indicates that the data field does not include the padding data. In another example, if a character in the Padding field is "1", the Padding field indicates that the data field includes the padding data.

The base station receives the uplink signals sent by each terminal device. After the base station correctly receives (that is, can correctly parse out information carried in the control field and the data field) the uplink signals, the base station reads the Padding field in the control field, to determine whether the data field includes the padding data.

For example, if the data field includes the padding data, the base station may further determine, based on the padding data, whether the uplink signals meet a preset condition.

S302. Determine second transmission power of an uplink signal of the terminal device based on padding data proportions of the N uplink signals.

In this embodiment of this application, the base station presets the preset condition. The preset condition includes but is not limited to: in N consecutive received uplink signals, padding data proportions of M uplink signals exceed a threshold. The threshold, a value of N, and a value of M may all be set based on an actual requirement. This is not limited in this application. M is less than or equal to N.

For example, optionally, the padding data proportion is a ratio of a data volume of padding data to a data volume of total data. The total data is the data information, and the total data is a sum of the valid data and the padding data.

For example, each time the base station receives an uplink signal from the terminal device, the base station detects whether the uplink signal includes the padding data. When determining that the padding data is included in the uplink signal, the base station obtains the padding data proportion. The base station starts recording from receiving the uplink signal of the terminal device for the first time. The base station sets a detection window, and a length of the window is N (which may be set based on an actual requirement, and is not limited in this application). The base station continues to receive the uplink signals sent by the terminal device, and when receiving an $N^{th}$ uplink signal, detects that a quantity of received uplink signals meets the detection window. In this case, the base station collects statistics on whether the N uplink signals in the detection window include M (that is, greater than or equal to M) uplink signals whose padding data proportions of are greater than or equal to the threshold. If the N uplink signals in the detection window include M uplink signals whose padding data proportions of are greater than or equal to the threshold, it is determined that the preset condition is met. If the N uplink signals in the detection window do not include M uplink signals whose padding data proportions of are greater than or equal to the threshold, when the base station receives a next uplink signal from the terminal device, the base station slides the detection window (a quantity of sliding steps is 1), and repeatedly determines whether the preset condition is met. In other words, the base station may determine the preset condition based on a second uplink signal to an $(N+1)^{th}$ uplink signal from the terminal device.

In this embodiment of this application, only sliding window detection is used as an example for description. In another embodiment, the base station may alternatively set a detection periodicity. For example, after receiving N uplink signals from a same terminal device, the base station determines the preset condition based on the N uplink signals. In a next periodicity, the base station determines the preset condition again based on N uplink signals received next time.

Optionally, in the preset condition, the value of M may alternatively be set to M consecutive uplink signals. In other words, it is determined that the preset condition is met when there are M consecutive uplink signals whose padding data proportions of exceed the threshold.

In this embodiment of this application, if the N uplink signals received by the base station from the same terminal device meet the preset condition, the base station sends first power indication information to the terminal device, to indicate second transmit power (which may also be referred to as second transmission power). The second transmit power is less than first transmit power. In other words, in this embodiment of this application, if the N uplink signals meet the preset condition, the base station reduces the transmit power of the uplink signals of the terminal device. Correspondingly, the terminal device transmits the uplink signals at the second transmit power in response to the indication of the base station. In this way, the base station may determine a service status of the terminal based on the padding data proportion of the uplink signal. When a proportion of service data of the terminal is small, that is, the padding data proportion is large, the transmit power of the uplink signal of the terminal device may be reduced, thereby reducing energy consumption of the terminal device, further reducing battery consumption of the terminal device, and prolonging standby time of the device. In addition, power allocation reasonableness in a system can be improved, to avoid a waste of resources and improve overall efficiency and throughput of a network. In addition, in this application, corresponding power adjustment policies are set for different service statuses of the terminal device, so that a network congestion phenomenon can be avoided, communication efficiency can be improved, and use experience of an online user can be improved. In addition, inter-cell interference can be further reduced by reducing the transmit power, especially when a quantity of terminals is small and/or a service volume of the terminal is small, so that an anti-interference capability of the system can be improved, thereby improving overall network performance, stability, and energy efficiency of the system.

In this embodiment of this application, if the N uplink signals received by the base station from the same terminal device do not meet the preset condition, the base station sends second power indication information to the terminal device, to indicate third transmit power. The third transmit power is greater than or equal to the first transmit power. In other words, in this embodiment of this application, if the N uplink signals meet the preset condition, the base station increases the transmit power of the uplink signals of the terminal device, or indicates the terminal device to remain the transmit power of the uplink signals unchanged. Correspondingly, the terminal device transmits an uplink signal at the third transmit power in response to the indication of the base station.

S303. Send power indication information to the terminal device, where the power indication information indicates the terminal device to send the uplink signal at the second transmission power.

Specifically, after determining the transmit power (including the first transmit power or the second transmit power) of the uplink signals of the terminal device, the base station sends a PDCCH to the terminal device, where DCI in the PDCCH includes transmit power information. Optionally, the DCI information is an adjustment amplitude of the transmit power. For example, if the DCI indicates "0", the DCI indicates that the adjustment amplitude of the transmit power is 0, and it may also be understood that the DCI indicates to remain the transmit power unchanged. If the DCI indicates "-1", the DCI indicates that the adjustment amplitude of the transmit power is -1, and it may also be understood that the DCI indicates to reduce the transmit power. If the DCI indicates "1", the DCI indicates that the adjustment amplitude of the transmit power is 1, and it may also be understood that the DCI indicates to increase the transmit power.

In a possible implementation, the adjustment amplitude indicated by the DCI may include a plurality of levels. The base station may preset a correspondence between an adjustment condition and the adjustment amplitude. The adjustment condition may include but is not limited to a distance between the terminal device and the base station, and may be set based on an actual requirement. This is not limited in this application.

For example, the base station may obtain a transmission distance between the base station and the terminal device based on the received uplink signals of the terminal device (for an obtaining manner, refer to a conventional technology, and this is not limited in this application). In the adjustment condition, a correspondence between different distances and adjustment amplitudes may be set. For example, a larger distance indicates a larger adjustment amplitude, and a smaller distance indicates a smaller adjustment amplitude. The correspondence may be set based on an actual requirement. This is not limited in this application.

For example, the base station determines that uplink signals of a terminal device A and uplink signals of a terminal device B meet the preset condition, and both transmit power of the terminal device A and transmit power of the terminal device B need to be reduced. The base station obtains that a distance between the terminal device A and the base station is a distance A, and a distance between the terminal device B and the base station is a distance B, where the distance A is less than the distance B. The base station may determine, based on the adjustment condition and the adjustment amplitude, that an adjustment amplitude corresponding to the distance A is X, and an adjustment amplitude corresponding to the distance B is Y, where X is less than Y. In other words, a reduction amplitude of the transmit power of the uplink signals of the terminal device B is greater than a reduction amplitude of the transmit power of the uplink signals of the terminal device A. In other words, when it is determined, based on the service status (that is, the padding data proportion), that the transmit power of the terminal device needs to be adjusted, the adjustment amplitude may be further determined based on another condition, to provide a more accurate power adjustment manner.

In this embodiment of this application, each step performed by the base station on the terminal device is performed on the terminal device accessing the base station. For example, FIG. 1 is used as an example. The base station 1 receives an uplink interfering signal of the UE 23, and the base station 1 may determine, based on the uplink interfering signal of the UE 23, that the uplink signal is an interfering signal. That is, the UE 23 is not a terminal device in the cell, and the base station 1 does not perform an operation such as determining the preset condition on the UE 23. In other words, in this embodiment of this application, the base station determines an adjustment policy of the transmit power of each terminal device based on the service status of the terminal device in the cell (that is, at least one cell of the base station) or accessing the base station. The adjustment policy includes but is not limited to increasing, reducing, and remaining unchanged. Further, when the base station detects that the uplink signals of the terminal device meet the preset condition, that is, the padding data proportion is large in the service data transmitted by the terminal device, the base station may reduce the transmit power of the terminal device of this type, to reduce the transmit power of the terminal device of this type with a large waste of resources (that is, the padding data proportion is large), thereby effectively reducing interference (that is, inter-cell interference) of the terminal device of this type to a terminal device in another cell. For example, still refer to FIG. 1. It is assumed that the base station 2 detects that uplink signals of the UE 23 meet the preset condition, the base station 2 reduces the transmit power of the UE 23. Correspondingly, after the transmit power of the UE 23 is reduced, the base station 1 may no longer receive the uplink interfering signal of the UE 23, thereby eliminating the inter-cell interference of the UE 23 to the terminal device in the base station 1.

The technical solutions in the foregoing method embodiment are described below in detail through several specific embodiments.

Scenario 1

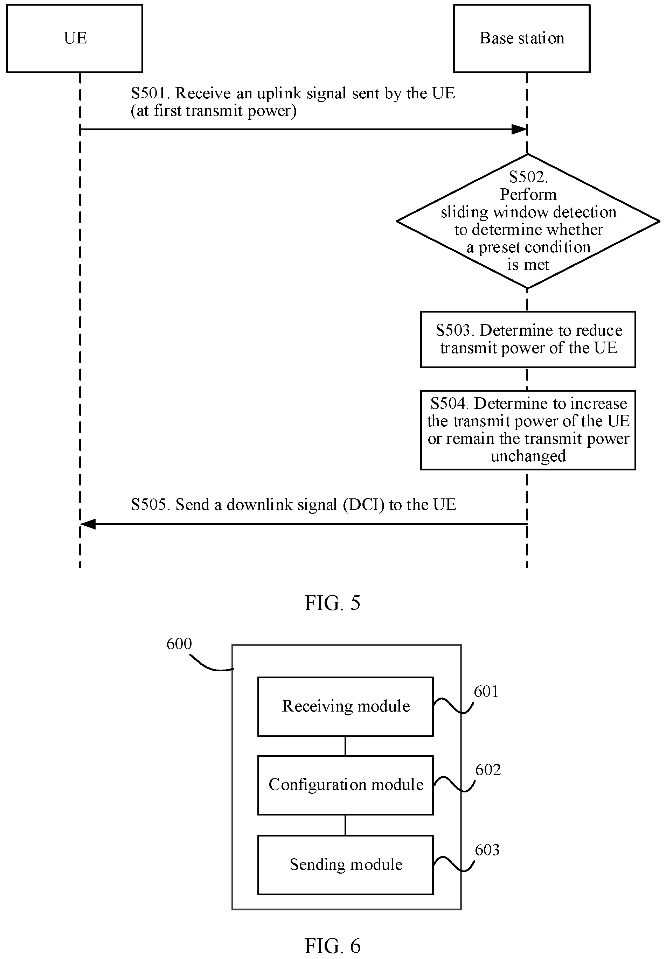

With reference to FIG. 3, FIG. 5 is a schematic flowchart of a power control method according to an embodiment of this application. FIG. 5 includes the following steps.

S501. A base station receives an uplink signal sent by UE.

For example, any UE in a system (for example, the system shown in FIG. 1) sends an uplink signal to a base station accessed by the UE. Transmit power of the uplink signal is first transmit power. The uplink signal includes control information and data information. The data information may include padding data (for a concept, refer to the foregoing descriptions), or may not include padding data. A terminal device may determine, based on a service status and uplink scheduling configuration information delivered by the base station, whether the data information includes the padding data.

For example, the base station receives the uplink signal sent by the UE. Optionally, the base station may be a base station accessed by the UE, or may be another base station. For example, as shown in FIG. 1, the UE may be the UE 23, and the base station may be the base station 1. That is, the base station 1 receives an uplink signal of the UE 23, and the uplink signal may also be understood as an interfering signal. Certainly, the UE may alternatively be the UE 13, and the base station may be the base station 1, that is, the base station 1 receives an uplink signal of the UE 13. In other words, the base station may be any base station in the system, and the UE may be UE in a cell of the base station or in a cell of another base station. This is not limited in this application.

S502. The base station performs sliding window detection to determine whether a preset condition is met.

For example, after the base station correctly receives the uplink signal, the base station slides a detection window (for a concept, refer to the foregoing descriptions, and details are not described herein again), and a length of the detection window is N. It is assumed that the detection window already includes N uplink signals from the UE. It should be noted that, unless otherwise specified, the UE in this embodiment refer to the same UE.

In this embodiment of this application, as described above, the base station may receive an uplink signal of a terminal device in the cell and an uplink signal of a terminal device in a cell of another base station. However, the base station correctly receives and parses only the uplink signal of the terminal device in the cell, that is, the base station does not perform S502 to S505 on the uplink signal of the terminal device that is not in the cell.

For example, the base station may store an uplink signal receiving list that is used to record an uplink signal receiving status of each UE. For example, the base station receives an uplink signal, parses the uplink signal, and obtains that a transmit end of the uplink signal is first UE. The base station may query the uplink signal receiving list for identification information corresponding to the UE, and obtain a corresponding receiving status of the uplink signal. In the receiving status of the uplink signal, information such as a quantity of received uplink signals of the UE and a padding data proportion corresponding to each received uplink signal may be recorded.

For example, the base station determines whether the N uplink signals from the UE in the detection window meet the preset condition. Specifically, identification of a single uplink signal is used as an example for description. After receiving the uplink signal, the base station identifies a Padding field. The base station determines, based on the Padding field, whether a data field of the uplink field includes the padding data. If the padding data is not included, the padding data proportion is 0. The base station records a proportion result of the padding data in the uplink signal receiving list. If the padding data is included, the base station obtains the padding data proportion (for an obtaining manner, refer to the foregoing descriptions), and records the proportion in the uplink signal receiving list. Each time the base station receives an uplink signal from the UE, the base station obtains a padding data proportion, and records the proportion in the uplink signal receiving list. The base station performs window sliding in recorded uplink signals of the UE, to detect whether the uplink signals of the UE meet the preset condition.

In an example, if the preset condition is met, S503 is performed.

In another example, if the condition is not met, S504 is performed.

S503. The base station determines to reduce transmit power of the UE.

For example, when determining that the uplink signals of the UE meet the preset condition, the base station may determine that the transmit power of the UE needs to be reduced. A reduce amplitude may be determined based on a distance between the base station and the UE, or may be determined based on another condition. This is not limited in this application.

S504. The base station determines to increase the transmit power of the UE or remain the transmit power unchanged.

For example, if the base station determines that the uplink signals of the UE do not meet the preset condition, the base station may determine that the transmit power of the UE needs to be increased, or the transmit power of the UE needs to remain unchanged. The base station may also choose to increase the transmit power (and an increase amplitude) or remain the transmit power unchanged based on the distance between the UE and the base station or another condition. This is not limited in this application.

S505. The base station sends a downlink signal to the UE.

For example, the base station determines the transmit power of the uplink signals of the UE and other information (for example, other uplink scheduling information), and the base station sends a PDCCH to the UE. DCI in the PDCCH includes TPC, indicating transmit power for the terminal to send an uplink signal next time. If the base station determines to increase the transmit power of the UE, a value of an adjustment amplitude of the transmit power indicated by the DCI is greater than 0. If the base station determines to reduce the transmit power of the UE, the value of the adjustment amplitude of the transmit power indicated by the DCI is less than 0. If the base station determines to remain the transmit power of the UE unchanged, the value of the adjustment amplitude of the transmit power indicated by the DCI is 0. Certainly, an indication manner of the DCI is merely an example. In another embodiment, the indication manner may be set based on an actual requirement. This is not limited in this application.

For example, the UE sends the uplink signal based on the transmit power indicated by the base station. For example, power corresponding to the uplink signal sent by the UE next time is second transmit power. Optionally, the second transmit power is less than the first transmit power.

In this example, only single UE is used as an example for description. In actual application, each base station performs the foregoing steps on UE corresponding to all received uplink signals, to generate a corresponding adjustment policy of transmit power for UE corresponding to each received uplink signal. The adjustment policy includes but is not limited to: increasing the transmit power, reducing the transmit power, or remaining the transmit power unchanged, so that differentiated power control is implemented for different types of services, thereby further improving network performance and user experience.

The foregoing mainly describes the solutions provided in embodiments of this application from a perspective of interaction between network elements. It may be understood that, to implement the foregoing functions, a power control apparatus includes a corresponding hardware structure and/or software module for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the power control apparatus may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, another division manner may be used.

When each function module is obtained through division based on a corresponding function, or when each function module is obtained through division based on a corresponding function, FIG. 6 is a diagram of a possible structure of a power control apparatus 600 in the foregoing embodiments. As shown in FIG. 6, the power control apparatus may include: a receiving module 601 and a configuration module 602, where the receiving module 601 is configured to receive N uplink signals sent by a terminal device, where the N uplink signals are sent by the terminal device based on first transmission power, and N is an integer greater than 1, and the configuration module 602 is configured to determine second transmission power of an uplink signal of the terminal device based on padding data proportions of the N uplink signals; and a sending module 603, configured to send power indication information to the terminal device, where the power indication information indicates the terminal device to send the uplink signal at the second transmission power.

In a possible implementation, if the padding data proportions of the N uplink signals meet a preset condition, the second transmission power is less than the first transmission power, where the preset condition indicates that the padding data proportions of the N uplink signals exceed a threshold.

In a possible implementation, if the padding data proportions of the N uplink signals do not meet the preset condition, the second transmission power is greater than or equal to the first transmission power.

In a possible implementation, a single uplink signal includes a padding data field, the padding data field includes padding data indication information, the padding data indication information indicates whether the single uplink signal includes padding data, and the configuration module 602 is specifically configured to: determine, based on the padding data indication information in the padding data field of the single uplink signal, whether the single uplink signal includes the padding data; if the padding data indication information indicates that the single uplink signal does not include the padding data, determine that a padding data proportion of the single uplink signal is 0; and if the padding data indication information indicates that the single uplink signal includes the padding data, obtain the padding data proportion of the single uplink signal.

In a possible implementation, the preset condition includes: A quantity of uplink signals whose proportions of padding data exceed the threshold in the N uplink signals is greater than a preset quantity.

In a possible implementation, the padding data proportion is a ratio of padding data to total data in an uplink signal, and the total data includes padding data and valid data.

In a possible implementation, second power indication information is carried in a downlink control information DCI field of a physical downlink control channel PDCCH.

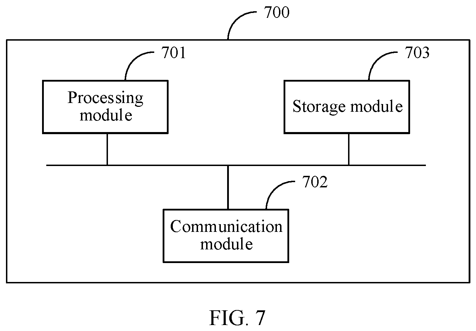

In another example, FIG. 7 is a block diagram of a power control apparatus 700 according to an embodiment of this application. The power control apparatus 700 may include a processor 701 and a transceiver/transceiver pin 702, and optionally, further includes a memory 703. The processor 701 may be configured to perform the steps performed by the power control apparatus in the methods in the foregoing embodiments, and control a receiving pin to receive a signal, and control a sending pin to send a signal.

Components of the power control apparatus 700 are coupled together through a bus 704. In addition to a data bus, the bus system 704 further includes a power bus, a control bus, and a status signal bus. However, for clear description, various types of buses in the figure are uniformly marked as the bus system 704.

Optionally, the memory 703 may be configured to store instructions in the foregoing method embodiments.

It should be understood that, the power control apparatus 700 in this embodiment of this application may correspond to the base station in the methods in the foregoing embodiments, and the foregoing and other management operations and/or functions of the elements in the power control apparatus 700 are separately intended to implement corresponding steps in the foregoing methods. For brevity, details are not described herein.

All related content of the steps in the foregoing method embodiments may be cited in function descriptions of corresponding functional modules. Details are not described herein again.

Based on a same technical idea, an embodiment of this application further provides a computer-readable storage medium. The computer-readable storage medium stores a computer program, the computer program includes at least one segment of code, and the at least one segment of code may be executed by a power control apparatus, to control the power control apparatus to implement the foregoing method embodiments.

Based on a same technical idea, an embodiment of this application further provides a computer program. When the computer program is executed by a power control apparatus, the foregoing method embodiments are implemented.

The program may be completely or partially stored in a storage medium packaged with a processor, or may be partially or completely stored in a memory not packaged with a processor.

Based on a same technical concept, an embodiment of this application further provides a processor. The processor is configured to implement the foregoing method embodiments. The processor may be a chip.

Methods or algorithm steps described in combination with the content disclosed in embodiments of this application may be implemented by hardware, or may be implemented by a processor executing software instructions. The software instructions may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose computer or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make various forms without departing from the purposes of this application and the protection scope of the claims, and all the forms shall fall within the protection of this application.

**Claims**

1. A power control method, comprising:

   receiving N uplink signals from a terminal device, wherein the N uplink signals are sent by the terminal device based on first transmission power, and N is an integer greater than 1;
   determining second transmission power of an uplink signal of the terminal device based on padding data proportions of the N uplink signals; and
   sending power indication information to the terminal device, wherein the power indication information indicates the terminal device to send the uplink signal at the second transmission power.

2. The method according to claim 1, wherein
   if the padding data proportions of the N uplink signals meet a preset condition, the second transmission power is less than the first transmission power, wherein the preset condition indicates that the padding data proportions of the N uplink signals exceed a threshold.

3. The method according to claim 2, wherein
   if the padding data proportions of the N uplink signals do not meet the preset condition, the second transmission power is greater than or equal to the first transmission power.

4. The method according to any one of claims 1 to 3, wherein a single uplink signal comprises a padding data field, the padding data field comprises padding data indication information, the padding data indication information indicates whether the single uplink signal comprises padding data, and the determining the second transmission power of the uplink signal of the terminal device based on the padding data proportions of the N uplink signals comprises:

   determining, based on the padding data indication information in the padding data field of the single uplink signal, whether the single uplink signal comprises the padding data;
   if the padding data indication information indicates that the single uplink signal does not comprise the padding data, determining that a padding data proportion of the single uplink signal is 0; and

if the padding data indication information indicates that the single uplink signal comprises the padding data, obtaining the padding data proportion of the single uplink signal.

5. The method according to claim 2 or 3, wherein the preset condition comprises:
a quantity of uplink signals whose padding data proportions exceed the threshold in the N uplink signals is greater than a preset quantity.

6. The method according to any one of claims 1 to 5, wherein the padding data proportion is a ratio of padding data to total data in a single uplink signal, and the total data comprises padding data and valid data.

7. The method according to any one of claims 1 to 6, wherein the power indication information is carried in a downlink control information DCI field of a physical downlink control channel PDCCH.

8. A power control apparatus, comprising:

a receiving module, configured to receive N uplink signals sent by a terminal device, wherein the N uplink signals are sent by the terminal device based on first transmission power, and N is an integer greater than 1;
a configuration module, configured to determine second transmission power of an uplink signal of the terminal device based on padding data proportions of the N uplink signals; and
a sending module, configured to send power indication information to the terminal device, wherein the power indication information indicates the terminal device to send the uplink signal at the second transmission power.

9. The apparatus according to claim 8, wherein
if the padding data proportions of the N uplink signals meet a preset condition, the second transmission power is less than the first transmission power, wherein the preset condition indicates that the padding data proportions of the N uplink signals exceed a threshold.

10. The apparatus according to claim 9, wherein
if the padding data proportions of the N uplink signals do not meet the preset condition, the second transmission power is greater than or equal to the first transmission power.

11. The apparatus according to any one of claims 8 to 10, wherein a single uplink signal comprises a padding data field, the padding data field comprises padding data indication information, the padding data indication information indicates whether the single uplink signal comprises padding data, and the configuration module is specifically configured to:

determine, based on the padding data indication information in the padding data field of the single uplink signal, whether the single uplink signal comprises the padding data;
if the padding data indication information indicates that the single uplink signal does not comprise the padding data, determine that a padding data proportion of the single uplink signal is 0; and
if the padding data indication information indicates that the single uplink signal comprises the padding data, obtain the padding data proportion of the single uplink signal.

12. The apparatus according to claim 8 or 9, wherein the preset condition comprises:
a quantity of uplink signals whose proportions of padding data exceed the threshold in the N uplink signals is greater than a preset quantity.

13. The apparatus according to any one of claims 8 to 12, wherein the padding data proportion is a ratio of padding data to total data in an uplink signal, and the total data comprises padding data and valid data.

14. The apparatus according to any one of claims 8 to 13, wherein the power indication information is carried in a downlink control information DCI field of a physical downlink control channel PDCCH.

15. A computer storage medium, comprising computer instructions, wherein when the computer instructions are run on an electronic device, the electronic device is caused to perform the method according to any one of claims 1 to 7.

16. A computer program product, wherein when the computer program product is run on a computer, the computer is caused to perform the method according to any one of claims 1 to 7.

17. A chip, comprising one or more interface circuits and one or more processors, wherein the interface circuit is configured to: receive a signal from a memory of an electronic device, and send the signal to the processor, wherein the signal comprises computer instructions stored in the memory; and when the processor executes the computer instructions, the electronic device is caused to perform the method according to any one of claims 1 to 7.

18. A power control system, wherein the system comprises at least one power control apparatus, and the at least one power control apparatus is configured to perform the method according to any one of claims 1 to 7.

FIG. 1

FIG. 2a

FIG. 2b

```
┌─────────────────────────────────────────┐ ⟋ S301
│  Receive N uplink signals sent by a       │
│  terminal device, where the N uplink      │
│  signals are sent by the terminal device  │
│  based on first transmission power,       │
│  and N is an integer greater than 1       │
└─────────────────────────────────────────┘
                    │
                    ▼
┌─────────────────────────────────────────┐ ⟋ S302
│  Determine second transmission power of   │
│  an uplink signal of the terminal device  │
│  based on proportions of padding data in  │
│  the N uplink signals                     │
└─────────────────────────────────────────┘
                    │
                    ▼
┌─────────────────────────────────────────┐ ⟋ S303
│  Send power indication information to the │
│  terminal device, where the power         │
│  indication information indicates the      │
│  terminal device to send the uplink       │
│  signal at the second transmission power  │
└─────────────────────────────────────────┘
```

FIG. 3

```
┌──────────────────┬ ─ ─ ─ ─ ─ ─ ─ ─ ┐
│    Valid data    │   Invalid data   │
└──────────────────┴ ─ ─ ─ ─ ─ ─ ─ ─ ┘

┌──────────────────┬──────────────────────────┐
│   Control field  │         Data field         │
└──────────────────┴──────────────────────────┘

┌────────┬───────────────┬─────────┐
│   ...  │ Padding field │   ...   │
└────────┴───────────────┴─────────┘
```

FIG. 4

| UE | | Base station |
|---|---|---|

S501. Receive an uplink signal sent by the UE
(at first transmit power)

S502.
Perform
sliding window detection
to determine whether
a preset condition
is met

S503. Determine to reduce
transmit power of the UE

S504. Determine to increase
the transmit power of the UE
or remain the transmit power
unchanged

S505. Send a downlink signal (DCI) to the UE

FIG. 5

600

Receiving module — 601

Configuration module — 602

Sending module — 603

FIG. 6

700

701

Processing
module

703

Storage module

702

Communication
module

FIG. 7

## INTERNATIONAL SEARCH REPORT

| International application No. |
|---|
| **PCT/CN2024/116883** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNKI, CNABS, CNTXT, ENTXT, ENTXTC: 阈值, 第二, 功率, 动态, 功率控制, 上行信号, 数据, 填充数据, 占比, threshold, second, uplink, occupy, dynamically, power control, proportion, data, padding

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114339975 A (HUAWEI TECHNOLOGIES CO., LTD.) 12 April 2022 (2022-04-12) description, paragraphs 0141-0229, and figure 5 | 1-18 |
| A | CN 108702709 A (BEIJING XIAOMI MOBILE SOFTWARE CO., LTD.) 23 October 2018 (2018-10-23) entire document | 1-18 |
| A | CN 110602778 A (DATANG MOBILE COMMUNICATIONS EQUIPMENT CO., LTD.) 20 December 2019 (2019-12-20) entire document | 1-18 |
| A | CN 115119293 A (SHENZHEN ONEPLUS TECHNOLOGY CO., LTD.) 27 September 2022 (2022-09-27) entire document | 1-18 |
| A | US 2014295909 A1 (SHARP K.K.) 02 October 2014 (2014-10-02) entire document | 1-18 |
| A | US 2016057711 A1 (ZTE CORP.) 25 February 2016 (2016-02-25) entire document | 1-18 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **18 November 2024** | **22 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/116883**

| Patent document cited in search report | | | Publication date (day/month/year) | Patent family member(s) | | | Publication date (day/month/year) |
|---|---|---|---|---|---|---|---|
| CN | 114339975 | A | 12 April 2022 | WO | 2022068521 | A1 | 07 April 2022 |
| | | | | EP | 4210400 | A1 | 12 July 2023 |
| CN | 108702709 | A | 23 October 2018 | WO | 2019227444 | A1 | 05 December 2019 |
| | | | | EP | 3799487 | A1 | 31 March 2021 |
| | | | | US | 2021160787 | A1 | 27 May 2021 |
| CN | 110602778 | A | 20 December 2019 | | None | | |
| CN | 115119293 | A | 27 September 2022 | | None | | |
| US | 2014295909 | A1 | 02 October 2014 | WO | 2013069656 | A1 | 16 May 2013 |
| | | | | JP | 2013098949 | A | 20 May 2013 |
| | | | | EP | 2779760 | A1 | 17 September 2014 |
| | | | | KR | 20140091712 | A | 22 July 2014 |
| | | | | CN | 103918323 | A | 09 July 2014 |
| US | 2016057711 | A1 | 25 February 2016 | WO | 2013178165 | A3 | 20 February 2014 |
| | | | | EP | 2978255 | A2 | 27 January 2016 |
| | | | | CN | 104066113 | A | 24 September 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311203839